# EUROPEAN PATENT APPLICATION

(11) **EP 3 082 017 A1**
(43) Date of publication of application: **19.10.2016**
(21) Application number: 15305566.0
(22) Date of filing: 15.04.2015
(51) Int. Cl.: G06F 3/01, G06F 3/14, G02B 27/01, G06F 3/03

(54) **METHOD AND SYSTEM FOR DISPLAYING ADDITIONAL INFORMATION ASSOCIATED WITH A CONTENT VIA AN OPTICAL HEAD MOUNTED DISPLAY DEVICE**

(71) Applicant: Thomson Licensing, 92130 Issy-les-Moulineaux (FR)
(72) Inventor: Redmann, William, Burbank, CA California 91501 (US); Huber, Mark, Burbank, CA California 91501 (US); Blonde, Laurent, 35576 Cesson Sevigne (FR)
(74) Representative: Perrot, Sébastien

(57) **Abstract**

In one embodiment, it is proposed a method for displaying additional information associated with a content, said content being displayed by a first optical head mounted display device worn by a first user and overlaying a first surface, and said content being also displayed by a second optical head mounted display device worn by a second user, and overlaying a second surface. The method is executed by said first optical head mounted display device, and is remarkable in that it comprises:
- obtaining the additional information, the additional information being information provided by said second user, and overlaying said second surface;
- adapting at least said additional information to said first surface delivering an adapted additional information;
- displaying said adapted additional information and said content by said first optical head mounted display device such that said adapted additional information and said content overlay said first surface, for said first user.

## Description

### Technical Field

The invention relates to a technique for enhancing human interactions on content (video, images, etc.) delivered by optical head mounted display devices.

### Background

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

When people are watching a same content delivered by a display device, human interactions conveyed by movements (i.e. gestures) and/or by sounds (i.e. voices, discussions, talks) ease the exchanges between people, and ease the understanding or the development of concepts related to the delivered display content.

For example, in document US 2012/0249591 (see Figure 2, and **§0086** to **§0088),** two users wear respectively a first and a second head mounted devices (or more precisely see through glasses) in order to see virtual objects on an anchor surface. Then, as they are in a same place, the gestures (done for collaborative purposes) are not rendered by the head mounted devices. Hence, the technique of document US 2012/0249591 can only be used by users in a same place if a human interaction is needed between the users.

The present disclosure aims to improve human interactions between people watching at least one same content delivered by optical head mounted display devices wherever they are (i.e. in a same place or in different places).

### Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present principles are directed to a method for displaying additional information associated with a content, said content being displayed by a first optical head mounted display device worn by a first user and overlaying a first surface, and said content being also displayed by a second optical head mounted display device worn by a second user, and overlaying a second surface. The method being executed by said first optical head mounted display device, and is remarkable in that it comprises:
- obtaining the additional information, the additional information being information provided by said second user, and overlaying said second surface;
- adapting at least said additional information to said first surface delivering an adapted additional information;
- displaying said adapted additional information and said content by said first optical head mounted display device such that said adapted additional information and said content overlay said first surface, for said first user.

In a preferred embodiment, the method for displaying additional information is remarkable in that said additional information correspond to a part of the human body of said second user.

In a preferred embodiment, the method for displaying additional information is remarkable in that said additional information correspond to a part of the finger of said second user.

In a preferred embodiment, the method for displaying additional information is remarkable in that said additional information is derived from a mechanical pointer.

In a preferred embodiment, the method for displaying additional information is remarkable in that said additional information correspond to a laser pointer information manipulated by said second user.

In a preferred embodiment, the method for displaying additional information is remarkable in that said adapting uses geometry information of said first surface.

In a preferred embodiment, the method for displaying additional information is remarkable in that said geometry information of said first surface is obtained from an identifying element.

In a preferred embodiment, the method for displaying additional information is remarkable in that said obtaining additional information comprises an acquisition, by a camera, of said information provided by said second user.

In a preferred embodiment, the method for displaying additional information is remarkable in that, in said obtaining, said additional information is obtained combined with said content.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*)*,* for example a CD-ROM (which stands for *"Compact Disc - Read Only Memory*") or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc. In a variant, the hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI / SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

It should also be noted that a step of obtaining an element/value in the present document can be viewed either as a step of reading such element/value in a memory unit of an electronic device or a step of receiving such element/value from another electronic device via communication means.

In another embodiment, it is proposed an optical head mounted display device comprising a displaying module configured to display a content that overlays a first surface. The optical head mounted display device is remarkable in that it further comprises:
- an obtaining module configured to obtain additional information, the additional information being information provided by a user of another optical head mounted display device that displays the same content;
- an adapting module configured to adapt at least said additional information to said first surface delivering an adapted additional information;
and wherein, said displaying unit is configured to display said adapted additional information and said content such that said adapted additional information and said content overlay said first surface.

In a preferred embodiment, the optical head mounted display device is remarkable in that said additional information correspond to a part of the human body of said user. of said another optical head mounted display device.

In a preferred embodiment, the optical head mounted display device is remarkable in that said additional information correspond to a part of the finger of said user of said another optical head mounted display device.

In a preferred embodiment, the optical head mounted display device is remarkable in that said additional information is derived from a mechanical pointer.

In a preferred embodiment, the optical head mounted display device is remarkable in that said additional information correspond to a laser pointer information manipulated by said user of said another optical head mounted display device.

### Brief description of the drawings

The above and other aspects of the invention will become more apparent by the following detailed description of exemplary embodiments thereof with reference to the attached drawings in which:
- Figure 1 shows an exemplary first reference surface as viewed by a first camera of a first AR (Augmented Reality) headset (or optical head mounted display device);
- Figure 2 shows a view seen by a first user through the first AR -headset wherein a content image (here a test pattern) is presented on the first display of the first AR headset, the image having been transformed to visually coincide with the first reference surface;
- Figure 3 shows a second reference surface as viewed by a second camera of a second AR headset;
- Figure 4 shows a view seen by a second user through the second AR headset wherein the same content image is presented on the second display of the second AR headset, having been transformed to visually coincide with the second reference surface;
- Figure 5 shows the view seen by the first user through the first AR headset as he points to a target position in the content;
- Figure 6 shows the view seen by the first camera as the first user points to the target position seen through the first display;
- Figure 7 shows an extracted portion of the view in Figure 5, cropped to the edges of the first reference surface as viewed by the first camera;
- Figure 8 shows a view seen by the first user, similar to that of Figure 6, but wherein the extracted portion of the camera view, transformed if and as needed, has been graphically overlaid onto the content image;
- Figure 9 shows the extracted portion of the first camera view, transformed in accordance with the second camera view of the second reference surface (as in Figure 3);
- Figure 10 shows the view seen by the second user, wherein the transformed extracted portion from FIG. 9 is overlaid on the shared image transformed as in FIG. 4, whereby the second user sees an image of the first user pointing to the target portion of the shared content image;
- Figure 11 shows a process performed by the first AR headset to share the pointing gesture of the first user with the second AR headset, according to an exemplary embodiment of the present principles;
- Figure 12 shows a process performed by the second AR headset to share the pointing gesture of the first user with the second user;
- Figure 13 shows an alternative process performed by the second AR headset;
- Figure 14 shows still another alternative process performed by the second AR headset;
- Figure 15 shows a block diagram of the image processing portions of the first and second AR headsets needed to relay the pointing gesture of the first user to the second user; and
- Figure 16 presents an example of a device that can be used to perform one or several steps of methods disclosed in the present document.

### Detailed description

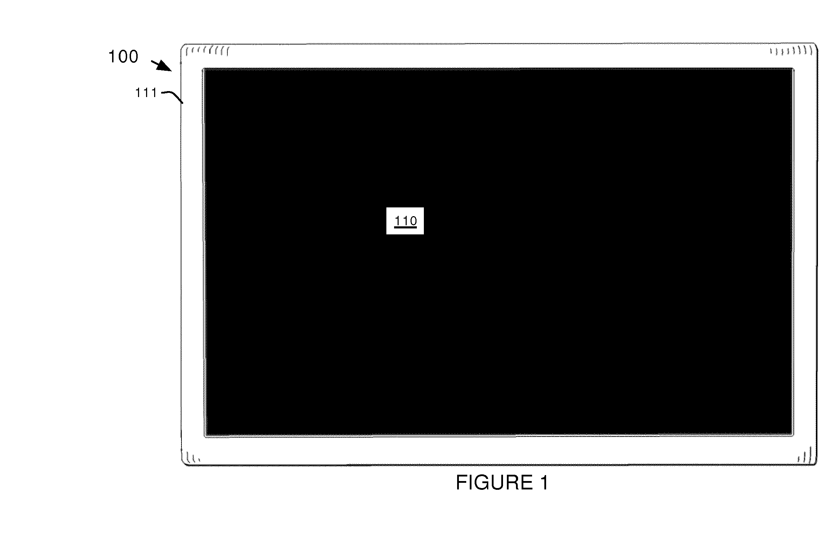

Figure 1 shows an exemplary first reference surface 100, such as a tablet with a screen which is switch off, or a device or support with a super-black material that absorbs a high percentage of surface light surface (as the material *"Vantablack"* from the Surrey NanoSystems company), as viewed by a first camera of a first AR headset.

Indeed, reference surface 100 (also named reference frame in the document) has a bounding frame 111 and an interior, substantially black surface 110. Bounding frame 111 is shown herein as a physical, dimensional frame, but that need not be the case. It is sufficient for interior surface 110 to be bounded by regions that contrast sufficiently with the interior region 110 to allow an image processing system to determine the bounds of interior surface 110.

For the example reference surface 100, which is a rectangle in an orthogonal view (not shown, though Figure 1 is nearly free of perspective), the position and relative orientation of the interior surface 110 can be determined from the position of any three of the four vertices relative to the field of view of the first camera. That is, it is sufficient to determine the coordinates within the image space of the first camera for any three of the four vertices. Further, if a particular vertex of interior surface 110 is obscured, the position of the obscured vertex can be determined by extrapolating from the visible portions of the adjacent edges and computing their intersection. This is true not just for rectangles, but for any planar polygonal figure having three or more sides. However, for embodiments in which more than one possible figure is allowed (e.g., rectangles having different aspect ratios, or polygons having a different number of sides), then it is important to be informed of the proportions of the observed figure (e.g., the aspect ratio of a rectangle, or that a triangle is equilateral). Absolute dimensions are not required.

Note that for the examples herein, the reference surfaces in the present document are shown as all being rectangular, and further having the same aspect ratio. This is for ease of explanations, and is not a requirement. Those skilled in the art will recognize that the present disclosure can also work with dissimilar reference surfaces, including non-rectangular ones. Where dissimilar surfaces are used, the system must determine whether an image shared between two AR users are to be mapped to the dissimilar surfaces: Scaled to fit entirely within each surface, or cropped to or allowed to extend beyond the edges of each surface, etc. It is also the case that the reference surfaces need not be planar.

Reference surface 100 may include an identifier (not shown) on either the bounding frame 111 or the black surface 110, or otherwise nearby. The identifier may emit a signal, e.g., an light-emitting diode (LED) or radio-frequency identifier (RFID), or the identifier may be a passive indicia, e.g., a barcode, QR code, or other label, whether plainly marked in the visible spectrum, or invisible, but detectable by cameras relying on emission or illumination in the infra-red or ultraviolet spectrum. The identifier may be human readable, in which case a user could enter the identifier into a system manually, or the identifier may be machine-readable, in which case it is directly available to a system. The identifier may represent reference surface 100 uniquely, or it may merely represent properties of the reference surface 100 (e.g., the physical dimensions of the interior surface 110, or relative dimensions such as an aspect ratio of a rectangle, or a flag to indicate that a polygon is regular, such as to indicate a triangle is equilateral). In an alternative embodiment, the identifier may refer to a database (not shown) where surface 100 characteristics are stored.

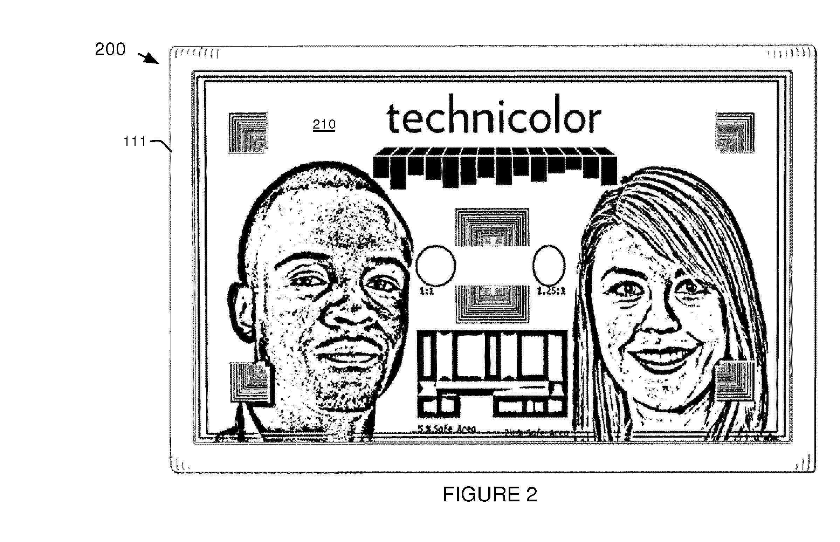

Figure 2 shows a view seen by a first user through the first AR headset (or first optical head mounted display device) wherein a content image (here a test pattern) is presented on the first display of the first AR headset, the image having been transformed to visually coincide with the first reference surface (i.e. the image appears to overlay the first reference surface when the image is displayed by the first AR headset).

More precisely, Figure 2 shows the view 200 presented to a first user wearing the first AR headset when content 210, here a test image, is presented in correspondence with the first reference surface 100. The test image 210 is transformed so as to overlay the first interior surface 110 when displayed. Since the interior surface 110 is substantially black, it contributes little to the view and so when the displayed image 210 is viewed against the black interior surface 110, what is visible is almost entirely the transformed version of test image 210 as displayed by the first AR headset, with substantially no contribution from the interior surface 110. Since the display limits its presentation to the edges of the interior surface 110, the reference surface bounding frame 111 is still substantially visible to the first user.

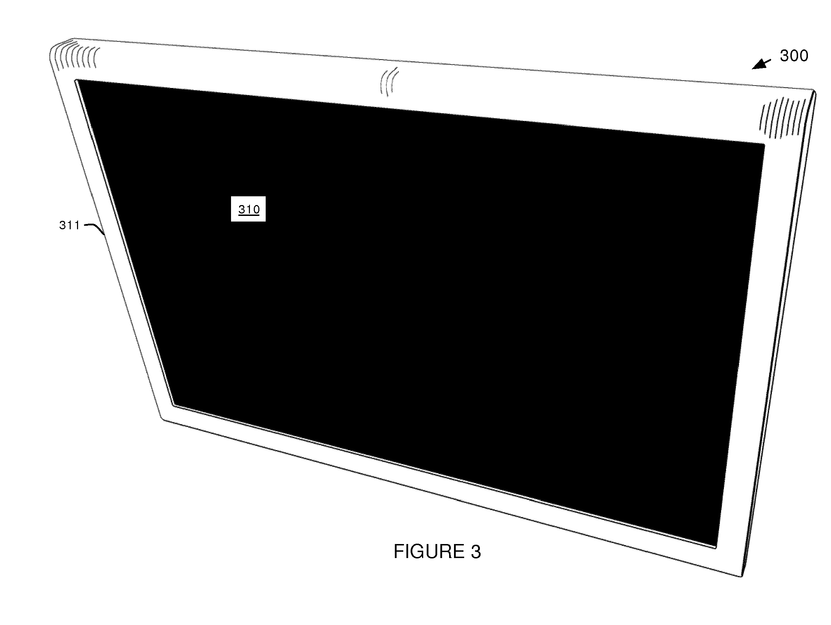

Figure 3 shows an exemplary second reference surface as viewed by a second camera of a second AR headset (or second optical head mounted display device).

More precisely, Figure 3 shows a view of a second reference surface 300, as seen by a second camera of a second AR headset worn by a second user. As with first reference surface 100, example reference surface 300 is shown as comprising bounding frame 311 and interior surface 310, which is substantially black. In this example, second reference surface 300 has physically the same aspect ratio as first reference surface 100, but as discussed above, this is not required.

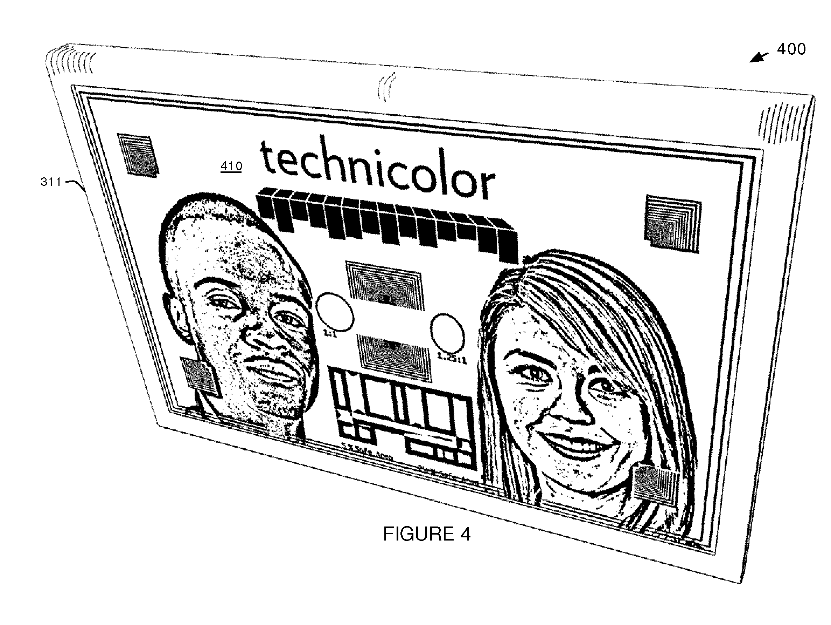

Figure 4 shows a view seen by a second user through the second AR headset wherein the same content image is presented on the second display of the second AR headset, having been transformed to visually coincide with the second reference surface.

More precisely, Figure 4 shows the view 400 presented to the second user wearing the second AR headset when the content (here, the same test image), is presented in correspondence with the second reference surface 300. The test image is transformed so as to overlay the second interior surface 310, producing the combined images/surface 410. As in Figure 2, since the interior surface 310 is substantially black, it contributes little to the view and so combined image/surface 410 is mostly the transformed test image as displayed by the second AR headset. Since the display limits its presentation to the bounds of the interior surface 310, the reference surface bounding frame 311 is still visible to the second user.

Note that in some situations, the first and second reference frame could be the same reference frame, viewed at the same time, by the first and second user. However, in the example presented here, the first and second reference frames are considered to be distinct. Further, as discussed above, other embodiments can have the first and second reference frames having dissimilar aspect ratios, or having different shapes. In the examples shown herein, they have the same aspect ratio and may further be the same size (though that is not necessarily the case).

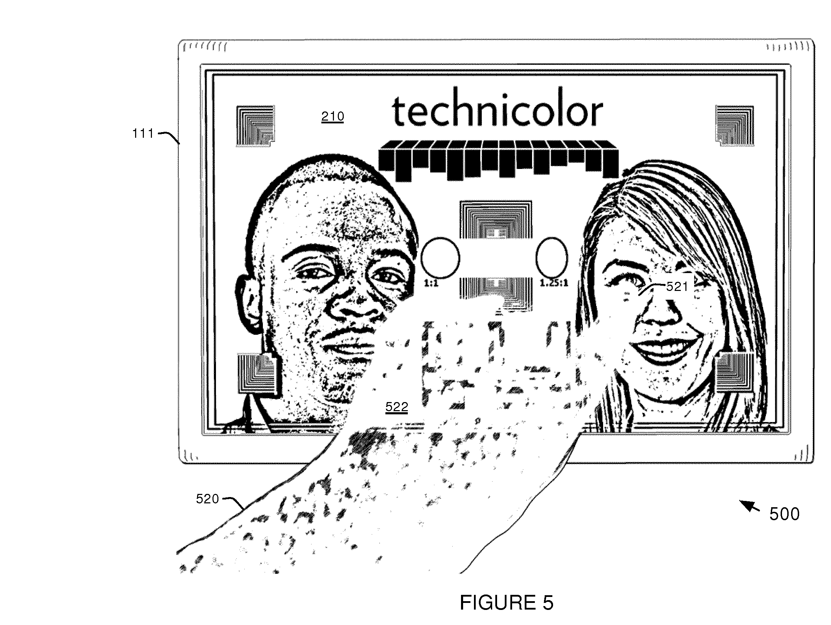

Figure 5 shows the view seen by the first user through the first AR headset as he points to a target position in the content.

More precisely, Figure 5 shows view 500, which is similar to the conditions of view 200, except here the first user has raised his hand 520 in a pointing gesture. Displayed image 210 is the same as displayed image 210 in Figure 2. But as viewed by the first user, region 522 will not appear as dark because the user's hand 520 has obscured the black surface 110 in the region 522. As a result, in region 522 the displayed image 210 appears to have a visibly reduced contrast. At any given point in region 522, the image 210 as displayed will appear no darker than the user's hand at that point, as viewed through the first AR headset (which may impose some amount of filtration that results in an apparent darkening of the hand 520 as compared with the view while not wearing the AR headset). The fingertip 521 of the first user indicates a particular position in the shared content image, as viewed through the first AR display.

Note that in some embodiments, the pointing by the first user can be achieved with a mechanical pointer (e.g., a pencil or stick), or a laser pointer without departing from this teaching.

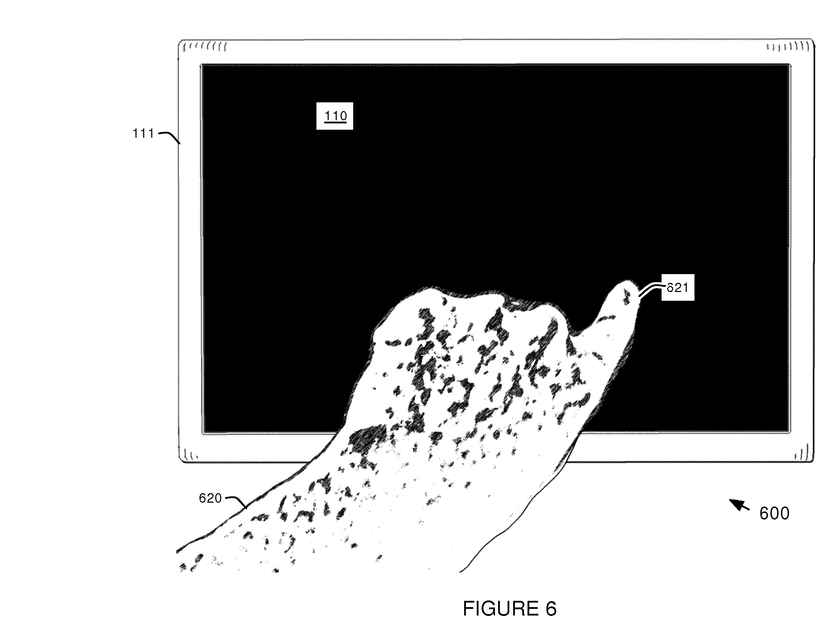

Figure 6 shows the view seen by the first camera as the first user points to the target position seen through the first display.

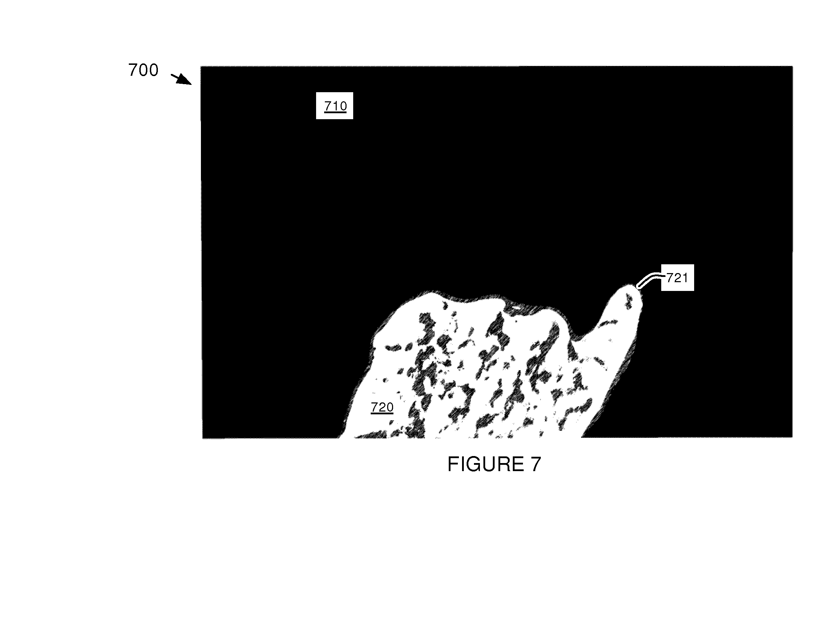

More precisely, Figure 6 shows the view seen by the first camera of the first AR headset while the first user is making the pointing gesture as shown in Figure 5. The resulting camera image 600 shows the first reference bounding frame 111, the interior surface 110 and the hand 620 (and arm) and fingertip 621. As before, this image 600 can be processed based on the vertices of the interior surface 110, which here allows the image 600 to be cropped to provide image 700 in which only hand region 720, including fingertip region 721, and the substantially black background region 710 are provided (see Figure 7). While cropped image 700 is not shown here as being transformed to a rectangle having the predetermined aspect ratio of interior surface 110, in some embodiments it may be. Also in some embodiments, the portion of the image corresponding to substantially black region 710 may be set to be transparent (not shown), e.g., by setting those pixels to a predetermined transparency index (as in GIF or PNG images) or by setting an alpha channel of the image to zero.

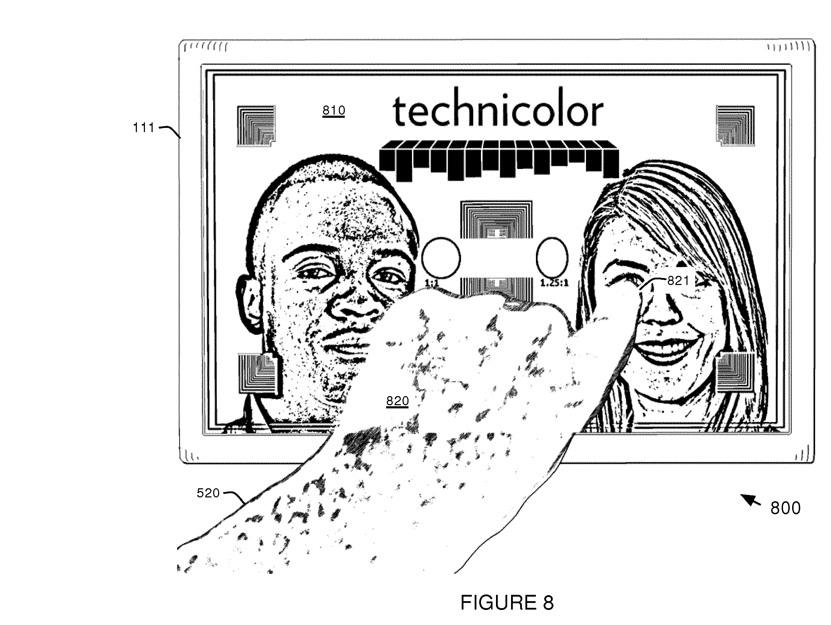

In some embodiments, the first AR headset may combine the cropped image 710 with the presentation of the shared image (here, the test image) as an aesthetic choice. Such a case is shown in Figure 8, to produce view 800, which is substantially similar to view 500, except that in image 810, the hand region 720 has been overlaid onto the content image 210 so as to appear as shown in region 820, where the hand image 720 from overlaid image 700 fully obscures the corresponding portion of the test image 210. This has the effect of making the hand 520 doing the pointing appear less ghostly and can also make the indicated position 821 at the fingertip more precise and more clearly visible, which can be valuable if the alignment and corrections between the image presented on the display and the physical background (e.g., hand and reference surface) are not perfect. As shown in Figure 8, there is a slight horizontal misalignment between the image of the hand in region 820 and the directly viewed portion of the hand 520, which this embodiment better manages by providing an image of the fingertip indicating position 821 in the presented image 810.

In an alternative embodiment, the local overlaying of the hand and surface image 700 into the content image 210 to produce composite image 810 need not be displayed by the first AR headset so as to visibly overlay the first reference frame. In such a case (not shown), the bounding frame 111 and actual hand 520 would not appear in alignment with the displayed image. That is, only the image 810 (with hand portion 820 and indicated position 821) would matter and there would be no particular attempt by the first AR headset to present image 810 in alignment with the first reference frame 100. Still, the first reference frame 100 serves to provide a real-world spatial reference which can be imaged (as in Figure 6) to produce hand image 700 which with image 210 either or both of which can be transformed so as to match and then be composited. Thus, while Figure 8 shows a full AR embodiment, the present invention can be used without the full restrictions imposed by such an implementation.

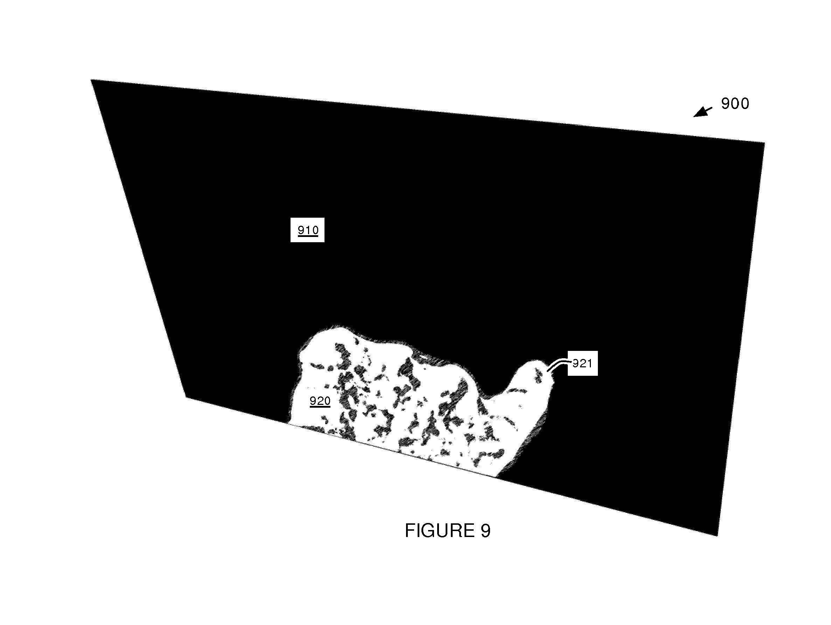

When the second AR headset is provided with an image of the first user's hand (e.g., as in images 600, 700, or 810, with 700 being used in this example embodiment), the image is transformed to correspond with the edges of interior surface 310, as shown in Figure 9 as transformed image 900 in which region 910 is the substantially black portion from region 710, hand region 920 is from region 720, and fingertip 921 is derived from fingertip 721.

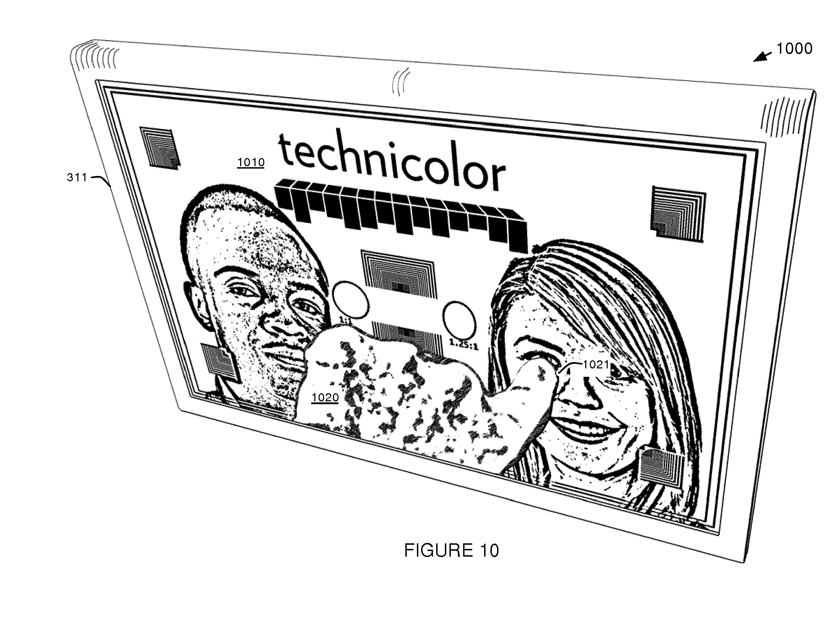

Figure 10 shows the view seen by the second user, wherein the transformed extracted portion from FIG. 9 is overlaid on the shared image transformed as in FIG. 4, whereby the second user sees an image of the first user pointing to the target portion of the shared content image.

More precisely, in view 1000, which the second user sees through the second AR headset, the transformed image 900 is overlaid onto the transformed shared content image 410 to produce composite image 1010, which results in the shared content image (here, the test pattern) being presented everywhere except in region 1020, where it shows the pointing hand of the first user, the fingertip of whom is pointing to location 1021, which substantially corresponds to the same portion of content image 210 as was pointed to by finger 521. Thus, the pointing gesture by the first user indicating a particular region of the shared content image is seen by the second user to indicate substantially the same region of the shared content image.

In some embodiments, the hand region 920 may be only partially mixed into the shared content image 410, so that the region 1020 in Figure 10 shows a semi-transparent (i.e., ghostly) hand overlaying the shared content so that the shared content is not wholly obscured by the hand image. A similar partial mixing can be used in the construction of image 810 of Figure 8.

Note that the image 1010 presented in view 1000 is substantially the same as image 810, though transformed to match the perspective view the second user has of the second reference frame 300. In some embodiment, rather than providing hand image 700 to the second AR headset as described above, the composite image 810 (without the transformation called for by the relative orientation of second reference frame 300) could be provided instead.

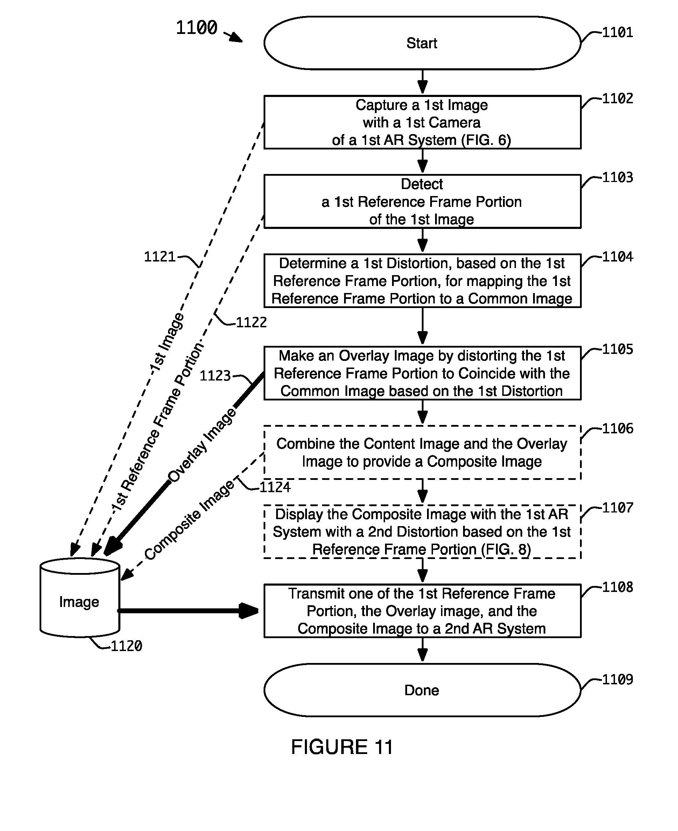

Figure 11 shows a process performed by the first AR headset to share the pointing gesture of the first user with the second AR headset, according to an exemplary embodiment of the present principles.

More precisely, Figure 11 shows a flowchart for a gesture image providing process 1100 as may be performed by a first AR headset. Process 1100 begins at step 1101 wherein a first field of view (FOV) of a first camera of a first AR headset is presumed to subtend enough of a first reference frame for determining the orientation of the reference frame with respect to the first camera, as described above. A communication channel from the first to the second AR headset is also presumed to have been set up and enabled, though it is only required for step 1108.

At step 1102, a first image is captured with the first camera. In some embodiments, this image 1121 is recorded directly to storage 1120.

At step 1103, the first image can be analyzed to determine the position of the first reference frame, e.g., by identifying the position for each of at least three of the vertices, either by directly locating them within the first image, or by inferring their position by extrapolation of the two adjacent edges. Within the first image, the portion corresponding to the interior surface 110, is considered to be the first reference frame portion of the first image. In some embodiments, this first reference frame portion is recorded to storage 1120.

At step 1104, a first distortion (i.e., a first transform) is determined, based on the analysis from step 1103. The first distortion maps the first reference frame portion to a common image, e.g., the content image 210. Note that content image 210 is typically rectangular, or at least based in rectangular coordinates and is not distorted.

At step 1105, the first distortion is applied to the first reference frame portion to produce an overlay image in alignment with the common image. In some embodiments, the overlay image 1123 is recorded to storage 1120 (this is the preferred embodiment).

Steps 1106-1107 are optional: In step 1106, the overlay image and the common image are combined to produce a composite image 1124 (e.g., 810), which may be recorded to storage 1120. In step 1107, the composite image 1124 is displayed with the first AR headset using another distortion based on the first reference frame portion. In embodiments where the display and camera axes provide coincident fields of view (i.e., the camera's FOV overlays the first user's FOV as viewed through the display), this other distortion may be the conjugate of the first distortion, but a more common case is that the camera and display do not have identical fields of view and a further transform must be provided, for example as might be determined with a calibration activity in step 1101, or may be predetermined in accordance with the design of the AR headset. These steps are optional because, while desirable, it is not strictly necessary to compute and display the composite image 810, since (as shown in Figure 5), a usable presentation 500 can be achieved without it.

At step 1108, whichever image 1121, 1122, 1123, 1124 was recorded in storage 1120 is transmitted to a second AR headset. Fundamentally, the second AR headset needs an image of the pointing gesture and it can be in any of the forms discussed here, each requiring a little more or a little less processing than the others. On one hand, any processing done by the first AR headset is valuable to the second AR headset, and for this reason, the latter images 1122, 1123, 1124 are each more valuable than their corresponding predecessor images 1121, 1122, 1123. However, some images are "heavier" than others, that is, contain more data, consume more storage, and more bandwidth when transmitted: Image 1121 (e.g., 600) has the full resolution of the first camera. Image 1122 is a cropped down version of that, and is mostly black, which can permit a substantial amount of compression when properly encoded. Even after having been transformed to form overlay image 1123, which may increase the resolution with respect to image 1122, the amount of data required to represent the overlay image 1123 is still similar to that for 1122, when appropriate compression and encoding are considered. Typically, the worst case will be composite image 1124, which requires at least as much data to represent as overlay image 1123, plus the additional data necessary to represent the visible portion of the common image. Further, if the common image is static, that is, a still image, it would at most need to be acquired only once, but where composite image 1124 is being used, a substantial portion of the common image would need to be sent for each iteration. Thus, overlay image 1123 is considered to be the preferred choice, as it embodies a substantial portion of the processing invested by the first AR headset, yet it also provides a minimum or near minimum required communication bandwidth when sent.

Gesture image providing process 1100 concludes at step 1109, but the process (at least steps 1102 to 1109) can be repeated as often as considered useful. In some situations, where the first user merely wishes to indicate a particular position in a piece of static shared content, it is sufficient to make the gesture and trigger a single iteration of process 1100. In other situations, e.g., where the content is dynamic (e.g., a motion picture) or the gesture involves movement (e.g., tracking a contour or indicating a desired rate of movement), then process 1100 might be repeated at some regular interval (e.g., at the frame rate of the source content, if dynamic, or at the frame rate of the first camera).

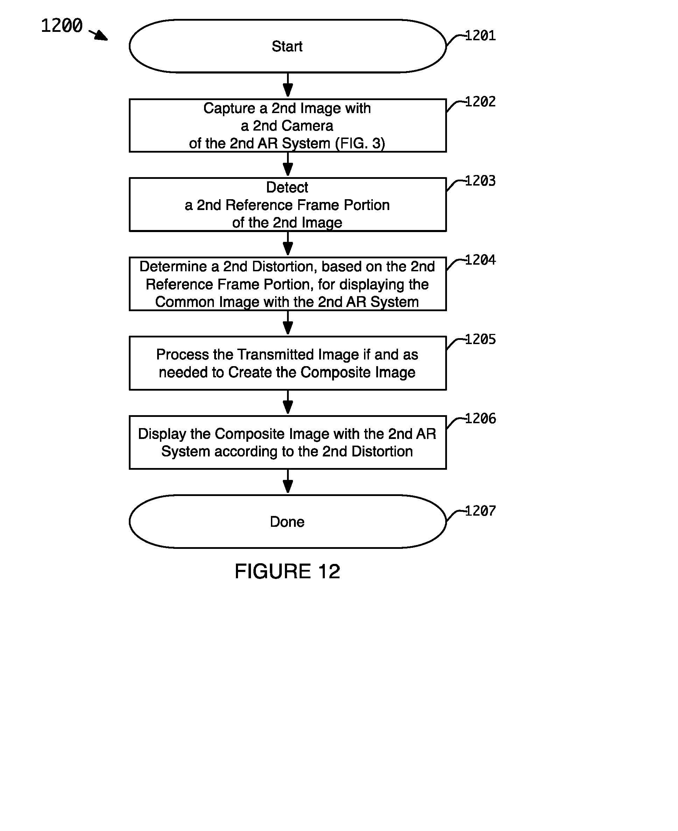

Figure 12 shows a process performed by the second AR headset to share the pointing gesture of the first user with the second user.

More precisely, Figure 12 shows a remote gesture image display process 1200 to be performed by a second AR headset. Process 1200 begins at step 1201 wherein a second field of view of a second camera of a second AR headset is presumed to subtend enough of a second reference frame for determining the orientation of the reference frame with respect to the second camera, as described above. Process 1200 may be undertaken in response to receipt of a gesture image from a first AR headset performing gesture image providing process 1100, where a received gesture image is the gesture image transmitted in step 1108 of process 1100.

At step 1202, the second camera captures an image, which is analyzed at step 1203 to detect a second reference frame portion as described in conjunction with step 1103.

At step 1204, a second distortion is determined, where here the second distortion is for mapping the common image to the display of the second AR headset, so that from the point of view of a second user wearing the second AR headset, the common image appears to overlay the second reference frame. (This second distortion corresponds to the "other" distortion in optional steps 1106 and 1107 of process 1100, which in this process 1200 are not optional).

In step 1205, the transmitted image from step 1108 of process 1100, is processed if and as needed to produce a composite image, substantially similar to composite image 1124. If the transmitted image is composite image 1124, then no addition processing is needed. However, for an image provided that is of a lesser-processed type 1123, 1122, 1121, the corresponding sequence of processing steps must be performed to produce the composite image. Thus, if the transmitted image is the first image 1121, then step 1205 will comprise steps 1103, 1104, 1105 and 1106 in order for the second AR headset to obtain the composite image. If the transmitted image is the first reference frame portion 1122, then only steps 1104, 1105, and 1106 should be performed. If the transmitted image is the overlay image 1123, then step 1205 will comprise only step 1106 to convert the received overlay image 1123 to a composite image like 1124.

At step 1206, the composite image is transformed in accordance with the second distortion from step 1204, and the resulting image is displayed by the second AR headset, whereby the second user is provided with the shared content image, including the pointing gesture of the first user, displayed so as to appear in substantial alignment with the second reference frame.

The remote gesture image display process 1200 concludes at step 1207, but may be repeated as often as a new gesture image is received at step 1201, or as often as the second camera updates its image of the second reference frame in step 1202 (i.e., at the frame rate of the second camera).

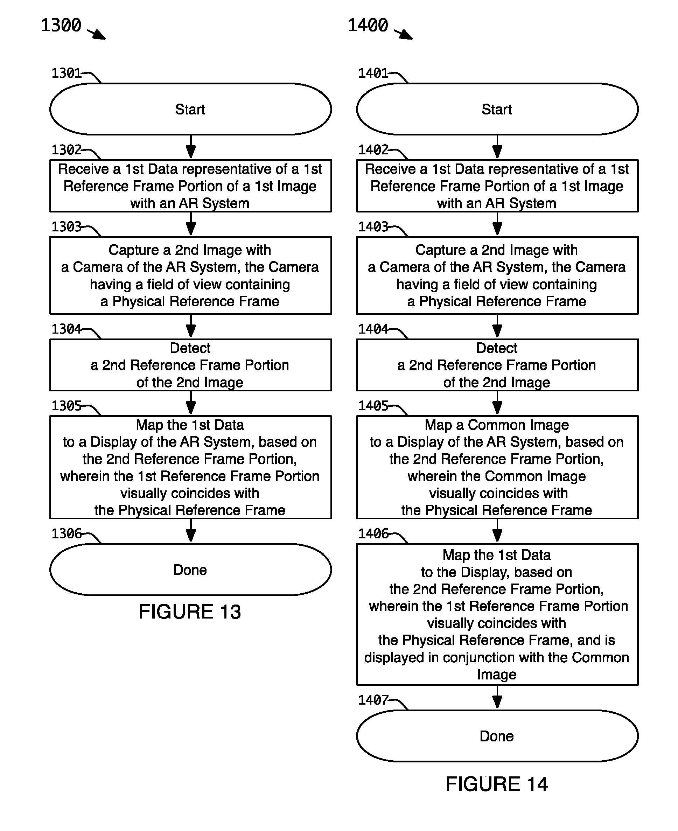

Figure 13 shows an alternative process performed by the second AR headset.

More precisely, Figure 13 shows a different embodiment of a remote gesture image display process 1300 which starts at 1301. At step 1302, a first data representative of a first reference frame portion of a first image is received by an AR system. This first data could be representative of any of images 1121, 1122, 1123, 1124. At step 1303, a camera of the AR system captures a second image of a physical reference frame (i.e. the real reference surface). At step 1304, the reference frame is detected in the second image as a second reference frame portion. At step 1305, the first data is mapped to a display of the AR system based on at least the second reference frame portion so that the first reference frame portion visually coincides with the physical reference frame. As with process 1200, process 1300 can be usefully repeated as often as new data is received for step 1302 or as often as a second image can be captured at 1303.

Figure 14 shows still another alternative process performed by the second AR headset.

More precisely, Figure 14 shows still another embodiment for a remote gesture image display process 1400 which starts at 1401 where process 1400 has access to a content image shared with a remote AR system (the "common image"). At step 1402, a first data representative of a first reference frame portion of a first image is received by an AR system. This first data could be representative of any of images 1121, 1122, 1123. At step 1403, a camera of the AR system captures a second image of a physical reference frame.

At step 1404, the reference frame is detected in the second image as a second reference frame portion.

At step 1405, the common image is mapped to the display of the AR headset, based on at least the second reference frame portion from step 1404, so that the common image will visually coincide with the physical reference frame. At step 1406, the first data received in step 1402 is mapped to the display, based on at least the second reference frame portion, wherein the first reference frame portion visually coincides with the physical reference frame and is displayed in conjunction with the common image. Process 1400 concludes at step 1407, but may usefully repeat whenever new first data is available for step 1402, the camera can obtain a new second image at step 1403, or a change occurs in common image.

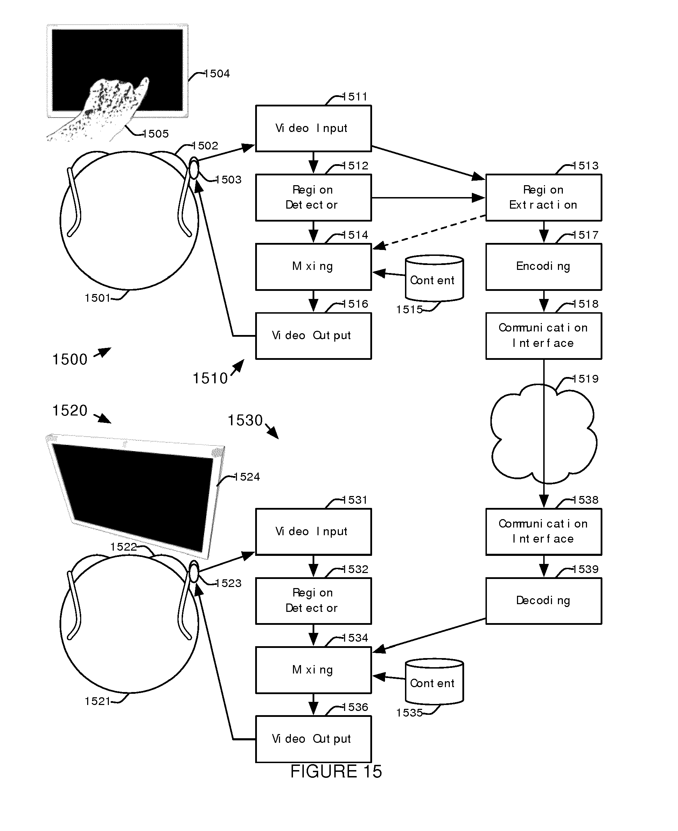

Figure 15 shows a block diagram of the image processing portions of the first and second AR headsets needed to relay the pointing gesture of the first user to the second user. The proposed system architecture enhances human interactions between first user 1501 and second user 1521.

More precisely, Figure 15 shows a block diagram of a shared augmented reality system having two stations 1500 and 1520 connected by communication channel 1519. At the first station 1500, first user 1501 wears an AR headset 1502 having a camera/display module 1503 while looking toward first reference frame 1504 and pointing with hand 1505. The image processor 1510 of station 1500 operates as follows:
Video input module 1511 receives video images from the camera in module 1503, that takes picture of the scene comprising hand 1505 and first reference frame 1504. Region detection module 1512 analyzes images from the video input module 1511 to detect and determine position of the first reference frame 1504 within the captured video image, supplying the position information to region extraction module 1513. Region extraction module 1513 selects the portion of the image corresponding to the interior region of the first reference frame 1504, including the included portion of pointing hand 1505 (if any).

In one embodiment, the extracted region is supplied to video mixing module 1514, which may use the reference frame position information from region detection module 1512 to combine the extracted region with a content image 1515 (which is preferably shared with the second station 1520). The mixing module 1514 transforms (warps) content image 1515 on the basis of the first reference frame position information and combines the transformed image with the extracted region from module 1513. The combined image is provided video output module 1516 and presented to user 1501 on the display of module 1503 so that the combined image appears to overlay the interior portion of the first reference frame 1504, as in Figure 8.

In another embodiment, video mixing module does not require the extracted region from module 1513 so only the transformed content image is provided to video output module 1516 and displayed (as shown in Figure 5).

In yet another embodiment, region extraction module 1513 may transform the detected region to coincide with content image 1515, in which case, mixing module 1514 would first combine the transformed detected region and the un-transformed content image first, then transform the combined image on the basis of the position information from detection module 1512 so as to achieve the overlay effect with first reference frame 1504 when displayed.

The extracted region from module 1513 is encoded for transmission by encoding module 1517. Depending upon the embodiment, region extraction module 1513 may provide an extracted image that is rectified (looking substantially like Figure 7, or more squared still), or may provide an unrectified extracted region (e.g., looking more like the trapezoidal shape of Figure 9). The region extraction module may pass on the position information from region detector module 1512 as metadata with the extracted image. In some embodiments, an entire unextracted region (e.g., looking like Figure 6) may be provided, though this can use communication bandwidth unnecessarily and requires more processing on the part of the second station 1520.

Encoding module 1517 may provide a compression function, for example a JPEG or MPEG-based image compression, both well known in the art and offering many choices for quality, compression ratio, bandwidth limits, and the like. Portions of the extracted region representing the interior portion 110 may be set to black, or some other predetermined color, or may be explicitly flagged as transparent. In other embodiments, the compression function may transmit only the hand portion (e.g., 720) of the detected region, with enough metadata to properly position that hand portion within the extents of the detected region 710.

The encoded region is provided to the communication interface module 1518 which sends it via network 1519 to the second station 1520. Network 1519 may comprise the Internet.

The image processor 1530 of station 1520 operates as follows:
The encoded region is received from first station 1500 by the second station 1520 with the communication interface module 1538, which provides the encoded region (as transmitted) to decoding module 1539. Image decoding module 1539 recovers, at least substantially, the region extracted by module 1513, by decompressing the region, if and as needed, in accordance with the encoding and compression employed by module 1517. The compression/decompression process performed by encoding and decoding modules 1517, 1538 may be lossless, but that is not a requirement. In some embodiments, the hand image recovered from the first station's transmission may be deliberately degraded or treated, e.g., to appear as coarse video or as cartoonish figure (e.g., with a heavy outline and homogenous interior color), and neither effect is shown here.

Once recovered by decoding module 1539, the extracted region is provided to mixing unit 1534.

At the second station 1520, second user 1521 wears a second AR headset 1522 having a second camera/display module 1523 while looking toward second reference frame 1524.

Video input module 1531 receives video images from the camera in module 1523. Region detection module 1532 analyzes images from the video input module 1531 to detect and determine position of the second reference frame 1524 within the captured video image, supplying the position information to video mixing module 1534.

Thus, mixing unit 1534 is provided with both the recovered extracted region from decoding module 1539 and the second reference frame position information from second region detector module 1532. Further, second mixing unit 1534 has access to content image 1535, similar to content image 1515. For example, the content images 1515, 1535 may be predetermined, may be dynamically constructed (e.g., algorithmically), may be acquired by each of stations 1500, 1520 from a common source (not shown) such as a web site, or may be presently or previously shared by one of stations 1500, 1520 with the other (not shown).

Much as with mixing module 1514, various image processing steps can be employed to combine the recovered extracted region from decoding module 1539 with the content image 1535 and provide the transform based on the position information from second region detector module 1532. In some embodiments, decoding module 1539 or second mixing module 1534 may be required to transform the recovered extracted region so as to coincide with the content image 1535, but in the preferred embodiment, this transform is performed by the first image processor 1510 as discussed above.

Once the content image 1535 and recovered extracted region (which includes the pointing hand) have been combined and transformed for presentation, the resulting image is provided to video output module 1536 and presented on the display of second camera/display module 1523 so at to appear overlaid with second reference frame 1524 when viewed by user 1521 as shown in Figure 10, whereby the second user sees the shared content with the pointing gesture made by the first user.

In some embodiments, the extracted region could be analyzed to identify the pointing location, e.g., the placement of fingertip 721 in Figure 7. In lieu of transmitting and compositing an actual image of the first user's hand (as illustrated by 820, 920, 1020), an abstraction of the pointing fingertip 721 could be provided, e.g. a crosshair, cursor, or the like (none shown) could be positioned to indicate the location of the fingertip 821, 921, 1021. Detection of a pointing fingertip 721 is known, for example, document US 4,843,568, especially Figures 11, 20, 22 and the discussion regarding them. In a related embodiment, parameters extracted from the extracted hand image 720, including for example the position of fingertip 721, or a description of the portion of the edge intersected by the first user's hand/arm (in Figure 7, roughly the central third of the lower edge) and/or other such parameters, could be used to control a 2D or 3D model of a hand (or other model suitable for pointing), so that not only is the location of the pointing made clear (i.e., the location of fingertip 721), but also the direction. Further, more complex hand poses could be detected and relayed in this way (e.g., the "OK" gesture, or a gesture indicating a pertinent expanse or extent - i.e., the portion of the image that lies between the first user's thumb and forefinger, not shown).

Note that in use, a generic pointing gesture that does not contact the surface 110 of the reference frame can be detected, but may exhibit some amount of parallax with the overlaid content image 1515 and as a result, the real fingertip 521 seen through the display in Figure 5 may not align with the image 210 precisely as does the fingertip image 1021 with the content image 1010 in Figure 10. Two approaches may mitigate this issue, and can be used separately or together: First, if the pointing gesture does contact the surface 110, then the parallax will be negligible. Second, if the hand image 820 is superimposed on the content image 810, as in Figure 8, and the first user receives the visual feedback of this combined display, then the first user points with fingertip image 821, thereby providing an intuitive compensation for any parallax with respect to his actual fingertip.

In some embodiments, e.g. as shown in Figure 15, the reference frames 1504, 1524 may be about the same size, or may be exactly the same size. In other embodiments, the reference frames may be radically different in scale, for example one reference frame may be a fraction of a meter diagonal (e.g., 1/2 meter) as in Figures 1 and 6, and the second reference frame may be huge, e.g., like a 15 meter diagonal billboard atop a building or along a highway. In the case of an extremely large billboard, a user will not be able to approach too closely, lest the boundaries of the reference frame fall outside the field of view of the camera (e.g., of camera/display module 1503), in which case the pointing finger 1505 will not be able to touch the surface of the reference frame, which can lead to the parallax issue, discussed above, which can be mitigated by providing the video hand image 820 as an overlay to the first user (as shown in FIG. 8).

In some embodiments, the first camera need not be located on an AR headset, unless the first user wishes to see the display superimposed in his field-of-view (which is often desirable). Using such an embodiment, the first user would seeing the view 600 (hand 620 pointing at interior region 110) instead of see a composite view that looks like 500, though a second user would still see view 1000. If a separate monitor were provided to the first users, in lieu of the display in AR camera/display module 1503, the first user's view of that monitor might look substantially like 1000, but where the image 1010 was displaying on the monitor rather than being superimposed over reference frame 311 by the second AR headset.

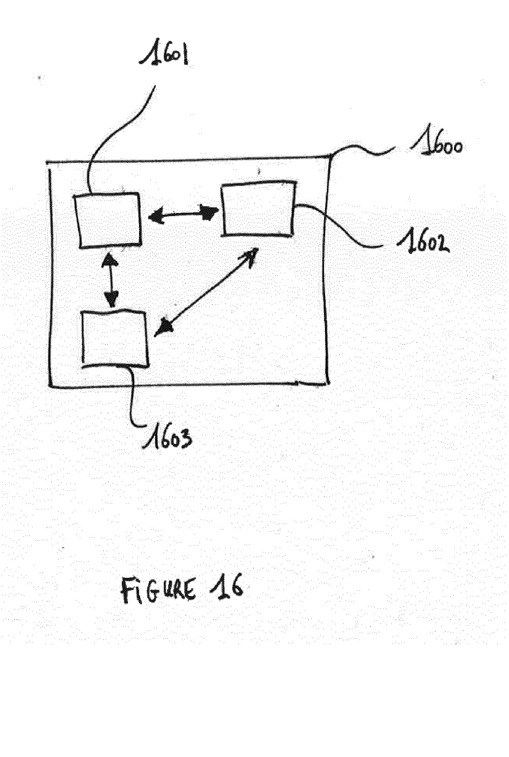

Figure 16 presents an example of a device that can be used to perform one or several steps of methods disclosed in the present document.

Such device referenced 1600 comprises a computing unit (for example a CPU, for *"Central Processing Unit"),* referenced 1601, and one or more memory units (for example a RAM (for *"Random Access Memory*") block in which intermediate results can be stored temporarily during the execution of instructions a computer program, or a ROM block in which, among other things, computer programs are stored, or an EEPROM *("Electrically-Erasable Programmable Read-Only Memory*") block, or a flash block) referenced 1602. Computer programs are made of instructions that can be executed by the computing unit. Such device 1600 can also comprise a dedicated unit, referenced 1603, constituting an input-output interface to allow the device 1600 to communicate with other devices. In particular, this dedicated unit 1603 can be connected with an antenna (in order to perform communication without contacts), or with serial ports (to carry communications "contact"). It should be noted that the arrows in Figure 16 signify that the linked unit can exchange data through buses for example together.

In an alternative embodiment, some or all of the steps of the method previously described, can be implemented in hardware in a programmable FPGA *("Field Programmable Gate Array")* component or ASIC *("Application-Specific Integrated Circuit")* component.

In an alternative embodiment, some or all of the steps of the method previously described, can be executed on an electronic device comprising memory units and processing units as the one disclosed in the Figure 16.

## Claims

1. Method for displaying additional information associated with a content, said content being displayed by a first optical head mounted display device worn by a first user and overlaying a first surface, and said content being also displayed by a second optical head mounted display device worn by a second user, and overlaying a second surface, said method being executed by said first optical head mounted display device, and being **characterized in that** it comprises:
- obtaining the additional information, the additional information being information provided by said second user, and overlaying said second surface;
- adapting at least said additional information to said first surface delivering an adapted additional information;
- displaying said adapted additional information and said content by said first optical head mounted display device such that said adapted additional information and said content overlay said first surface, for said first user.

2. Method for displaying additional information according to claim 1, **characterized in that** said additional information correspond to a part of the human body of said second user.

3. Method for displaying additional information according to claim 2, **characterized in that** said additional information correspond to a part of the finger of said second user.

4. Method for displaying additional information according to claim 1, **characterized in that** said additional information is derived from a mechanical pointer.

5. Method for displaying additional information according to claim 1, **characterized in that** said additional information correspond to a laser pointer information manipulated by said second user.

6. Method for displaying additional information according to any claims 1 to 5, **characterized in that** said adapting uses geometry information of said first surface.

7. Method for displaying additional information according to claim 6, **characterized in that** said geometry information of said first surface is obtained from an identifying element.

8. Method for displaying additional information according to any claims 1 to 7, **characterized in that** said obtaining additional information comprises an acquisition, by a camera, of said information provided by said second user.

9. Method for displaying additional information according to any claims 1 to 8, **characterized in that**, in said obtaining, said additional information is obtained combined with said content.

10. A computer-readable and non-transient storage medium storing a computer program comprising a set of computer-executable instructions to implement a method for displaying additional information when the instructions are executed by a computer, wherein the instructions comprise instructions, which when executed, configure the computer to perform the method of claims 1 to 9.

11. Optical head mounted display device comprising a displaying module configured to display a content that overlays a first surface, said optical head mounted display device being **characterized in that** it further comprises:
- an obtaining module configured to obtain additional information, the additional information being information provided by a user of another optical head mounted display device that displays the same content;
- an adapting module configured to adapt at least said additional information to said first surface delivering an adapted additional information;
and wherein, said displaying unit is configured to display said adapted additional information and said content such that said adapted additional information and said content overlay said first surface.

12. Optical head mounted display device according to claim 11, **characterized in that** said additional information correspond to a part of the human body of said user. of said another optical head mounted display device.

13. Optical head mounted display device according to claim 12, **characterized in that** said additional information correspond to a part of the finger of said user of said another optical head mounted display device.

14. Optical head mounted display device according to claim 11, **characterized in that** said additional information is derived from a mechanical pointer.

15. Optical head mounted display device according to claim 11, **characterized in that** said additional information correspond to a laser pointer information manipulated by said user of said another optical head mounted display device.
